# EUROPEAN PATENT SPECIFICATION

(11) **EP 0 983 920 B1**
(45) Date of publication and mention of the grant of the patent: **25.04.2001**
(21) Application number: 99104428.0
(22) Date of filing: 01.03.1999
(51) Int. Cl.: B60T 13/66, B60T 17/22

(54) **An electronically controlled electropneumatic device intended to be connected at the end of a train for facilitating braking thereof**
Eine elektronisch kontrollierte elektropneumatische Vorrichtung zum Anschluss an das Ende eines Zuges und zur Erleichterung der Bremsung dessen
Dispositif électro-pneumatique avec commande électronique pour raccorder au bout d'un train ferroviair et pour faciliter le freinage dudit train

(30) Priority: 04.09.1998 IT TO980745
(43) Date of publication of application: 08.03.2000
(73) Proprietor: SAB WABCO S.p.A., I-10045 Piossasco (Torino) (IT)
(72) Inventor: Barberis, Dario c/o Sab Wabco Spa, 10045 Piossasco (IT); Tione Roberto c/o Sab Wabco Spa, 10045 Piossasco (IT)
(74) Representative: Marchitelli, Mauro

(56) References cited:
- US-A- 4 056 286
- US-A- 5 507 457
- US-A- 5 564 794
- US-A- 5 638 276
- US-A- 5 788 338

## Description

The present invention relates to an electronically controlled electro-pneumatic device according to the preamble of claim 1, in particular for trains of high composition.

The braking system most used at international level is based on the operating principle of the Westinghouse air brake. This braking system comprises a main reservoir of compressed air arranged on the locomotive and fed by a compressor at a reference pressure of 5 bar. A brake pipe starts from the main reservoir and extends along all the vehicles of the train. A control cock arranged on the locomotive allows the pressure in the brake pipe to be reduced with respect to the reference pressure and a plurality of braking apparatus arranged on the various vehicles of the train produce a braking force correlated to the difference between the pressure in the brake pipe and the reference pressure.

With a braking system of this type, the braking of trains with high composition (for instance longer than one kilometre) is particularly difficult. In particular, the time for the propagation of the pneumatic brake command along the brake pipe and the times for recharging the brake pipe during brake-releasing are so high that the train becomes substantially uncontrollable at high speed braking and brake-releasing. This imposes a strong limitation of the speed of very long trains. In fact, goods trains longer than one kilometre typically have a maximum speed of about 40 km/h.

At present, in the attempt of improving this situation, a car with a cab manned by an operator is attached at the end of the train, the operator having the task of cooperating to braking the train on the basis of acoustic information transmitted by the motorman aboard the locomotive.

More specifically, the present invention relates to a device according to the preamble of claim 1, which is known from US-A-5 788 338. This document discloses an end-of-train unit including a regulating valve device and a stepping motor controlling the compression of a spring to establish a target pressure corresponding to a pressure command signal transmitted from the locomotive to the end-of-train unit. This known end-of-train unit is therefore in condition to discharge the brake pipe upon receiving radio signals, in order to cooperate to the braking action imposed by the motorman on board of the locomotive.

The object of the present invention is to provide a device which can cooperate to braking long trains, and which improves the performances of known devices, in particular from the point of view of the safety of operation.

According to the present invention, this object is achieved by a device having the features forming the subject of the main claim.

The invention now will be disclosed in detail with reference to the attached drawings, given purely by way of non-limiting example, in which:
- figure 1 is a schematic view of a train provided with a device according to the present invention, and
- figure 2 is an electro-pneumatic diagram of the device according to the present invention.

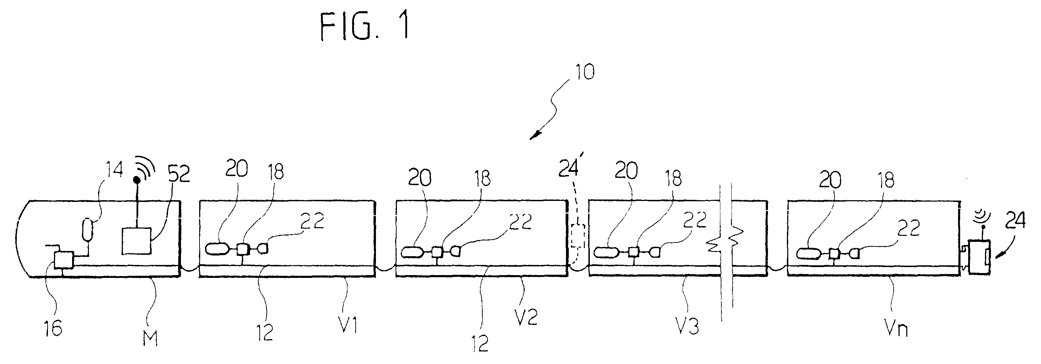

With reference to figure 1, the reference numeral 10 indicates a train formed by a locomotive M and by a plurality of vehicles coupled to each other, indicated at V₁, V₂, V₃, ...Vₙ. In a way per se known, the train 10 is provided with a pneumatic braking system including a brake pipe 12 which extends from the locomotive to the last vehicle of the train. The braking system comprises essentially a main reservoir 14 (dedicated to the braking system) arranged on the locomotive M and connected to the brake pipe 12 by means of a control cock 16.

A braking assembly including, in a way per se known, a distributor 18 pneumatically connected to an auxiliary reservoir 20 and to an actuator 22 mechanically connected to the brake control linkage, is arranged on each vehicle V₁, V₂, V₃, ...Vₙ.

When the brakes are open, the brake pipe 12 is at a normal pressure of 5 bar and all the auxiliary reservoirs 20 are at the same pressure as the brake pipe. When a braking command is generated by discharging the brake pipe by means of the control cock 16, a depression is produced which starts from the cock 16 and propagates along the brake pipe 12 until it reaches the last vehicle of the train. As soon as the distributors 18 receive such depression, they put the brake pipe 12 in communication with respective accelerating chamber (initially at atmospheric pressure) and subsequently put the auxiliary reservoir 20 in communication with the brake control actuator 22, thereby producing a braking force proportional to the reduction of pressure.

The braking of each vehicle begins as soon as the respective distributor 18 detects the passage of the depression. Such depression, starting from the head of the train, produces the intervention in succession of the various distributors 18 which directly connect the brake pipe 12 to the respective accelerating chambers. In this manner, a depression spike is obtained, which propagates to the other vehicles of the train. Therefore, braking of each vehicle begins with a delay which depends on the distance of the vehicle from the locomotive and on the speed of propagation of the depression spike along the brake pipe. The speed of propagation of the spike is constant and depends on the geometry of the braking system and according to the international standards must not be lower than 250 m/s.

The present invention provides for the use of an electronically controlled electro-pneumatic device 24 for cooperating to the braking of the train. The device 24 is intended in particular to be connected to the last vehicle Vₙ of the train 10 and can be incorporated in the optical signalling device with flashing red lights which is normally applied at the end of the train.

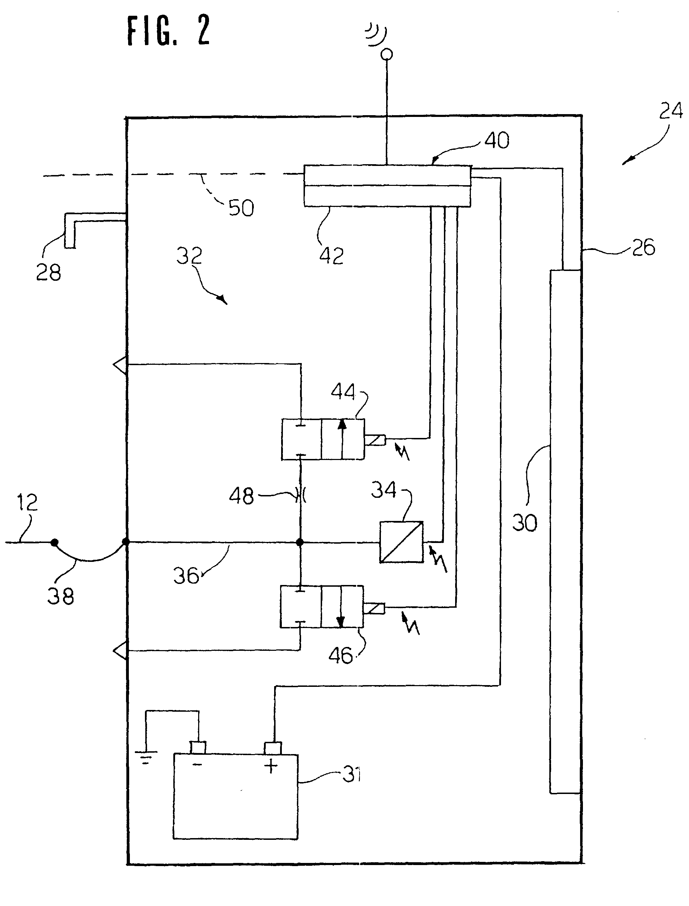

With reference to figure 2, the electro-pneumatic device 24 comprises a housing 26 provided with a hook schematically indicated at 28 for its connection to a railbound vehicle. An optical signalling device 30 is preferably arranged inside the housing 26, the signalling device being formed for instance by a lamp with flashing red light as provided by the standards on railroad transportation which require that the tail of the train be provided with such signalling device. The optical signalling device 30 is powered, in a way per se known, by a battery 31.

According to the present invention, the device 24 in addition to performing the function of end-of-train signalling device, comprises an electro-pneumatic section 32 adapted to cooperate to the braking of the train 10. The section 32 comprises a pressure transducer 34 which is connected to the brake pipe 12 by a line 34 and by a flexible joint 38. The transducer 34 detects the drop of pressure in the brake pipe 12 and sends an electric signal indicating the value of pressure to an electronic control unit 40 provided with an electro-pneumatic interface 42.

The electro-pneumatic section 32 further comprises a pair of electrically controlled valves 44, 46 which can assume either an open or a closed position. Both valves 44, 46 in their open position put the line 36 and therefore the brake pipe 12 in communication with the atmosphere. A throttling 48 is placed upstream of the valve 44 and has the purpose of limitating the discharge in atmosphere of the brake pipe 12. On the contrary, the discharge in atmosphere of the brake pipe is not subjected to any limitation through the valve 46.

Valves 44 and 46 are controlled by the electronic unit 40 and are bistable, that is they require a positive command for passing from one operative position to the other. Consequently, the valves 44, 46 cannot change their operative position simply because of the absence/presence of electric power; on the contrary, for changing the operative position of each valve it is necessary both to remove power to the powered portion of the valve and power the portion which previously was not powered.

The electric valve 44, being associated to the throttle 48, allows a limited discharge of the brake pipe and consequently permits a regulation of the pressure at the end of the train for obtaining an acceleration of the braking command. The electric valve 46 permits instead a discharge with a great flow-rate of the brake pipe and is intended to be used mainly for emergency braking.

The electronic control unit 40 controls the opening of the valves 44, 46 as a function of the signals coming from the pressure transducer 34. More precisely, when the pressure transducer 34 detects the presence of a depression spike in the brake pipe 12, the control unit 40 opens the valve 44 for a predetermined time or until a predetermined depression is obtained in the brake pipe or again in accordance with a law which combines the time of aperture and the decrease of pressure. When the pressure transducer 34 detects a drop of pressure of an entity corresponding to an emergency braking, the control unit 40 opens the valve 46.

By connecting the brake pipe 12 to the atmosphere through the valves 44 or 46 a more uniform braking of the train is obtained and the time of intervention of the braking devices of the various vehicles of the train is reduced.

The control unit 40 is able to distinguish a braking command coming from the locomotive from possible disturbances on the basis of the subsequent variation of the depression in the brake pipe after having detected the depression spike. The control unit 40 can be programmed for storing the pressure variation in the brake pipe during the test of the braking system of the train and can be programmed for determining the aperture of the valves 44 or 46 only when, in operation, the pressure variation detected by the transducer 34 reproduces the pressure variation detected during the test of the braking system.

The electronic control unit 40 can also be programmed for communicating with a unit 52 (figure 1) placed on the locomotive, for instance via radio or through a serial bus schematically represented by the dotted line indicated at 50 in figure 2. The unit 40 can communicate to the locomotive information about the operating state of the system and can be programmed for receiving via radio or via bus braking commands which are implemented by opening the valves 44 or 46.

The electronic control unit 40 can also be programmed for determining, although approximatively, the length of the train on the basis of the time variation of the pressure in the brake pipe 12 following a braking command. In fact, the curve of the pressure as a function of the time as a different inclination depending on the length of the train. Therefore, by detecting the pressure in different moments by means of the transducer 34, it is possible to determine the approximative length of the train and such information can be transmitted for instance via radio to a control center.

The device according to the present invention allows to carry out the test of a braking system of a train in a way which is much more easier than the present procedure. The test of the braking system requires in a first step the application of a braking command from the locomotive and the verification that such command has reached the tail of the train. In a second step, it is necessary to verify that the aperture of the brake pipe at the tail of the train produces a braking command which propagates until the locomotive. Traditionally, for carrying out this test, in is necessary that an operator moves along the whole train for verifying that the brake command starting from the locomotive has reached the last vehicle of the train and also for opening the end cock placed on the last vehicle of the train for carrying out the test of the braking system in the reverse manner, that is from the tail towards the locomotive. With the device according to the present invention, both tests can be carried out without the need for an operator to move along the train. The first step of the test is carried out by applying the braking command from the locomotive and by detecting by means of the electronic control unit 40 and the transducer 34 the presence of a depression signal at the tail of the train in a time compatible with the estimated length of the train. The test of the braking system in the reverse manner (from the tail towards the locomotive) can be carried out by sending a command via radio or via bus to the electronic control unit 40 which, after receiving such command, opens one of the valves 44, 46. The fact that the depression has correctly propagated from the tail to the head of the train can be easily verified by the operator by visually inspecting whether or not the brakes of the locomotive have been activated or if the pressure gauge installed on the locomotive signals a drop of pressure.

Although the device according to the invention has been developed specifically for the application at the tail of a train, it is not excluded that it can be placed in one or more intermediate points of the train, as schematically indicated by the reference 24' in figure 1. When the device must be installed in an intermediate point of the train, it may not have the optical signalling device.

## Claims

1. An electronically controlled electro-pneumatic device for cooperating to the braking of a trackbound train (10) having an air braking system including a brake pipe (12) which extends along all the vehicles (M, V₁, V₂, V₃, ...Vₙ) of the train, comprising:
- a pressure transducer (34) adapted to detect a depression spike in the brake pipe (12) of the train (10),
- at least one electric valve (44, 46) which can be operated between an open and closed position, in which in its open position said electric valve (44, 46) puts the brake pipe (12) in communication with the atmosphere,
characterized in that it comprises an electronic control unit (40) adapted to control the aperture of said electric valve (44, 46) when said pressure transducer (34) detects the presence of a depression spike in the brake pipe (12) so as to permit a control of the braking from the tail of the train even without information transmitted by the locomotive via radio or via bus.

2. A device according to claim 1, characterized in that said electronic control unit (40) is programmed for opening said electric valve (44, 46) for a predetermined time or until a predetermined depression in the brake pipe is reached or in accordance with a law which combines the time of aperture and the drop of pressure in the brake pipe.

3. A device according to claim 1, characterized in that said electronic control unit (40) is programmed for determining the approximative lengths of the train (10) as a function of signals provided by said pressure transducer (34).

4. A device according to claim 1, characterized in that it comprises a first electric valve (44) provided for carrying out a controlled discharge of the brake pipe and a second electric valve (46) adapted to carry out a rapid discharge with great flow-rate of the brake pipe.

5. A device according to claim 1, characterized in that the electronic control unit (40) is programmed for sending to the locomotive a signal indicating the receipt of a braking command which has travelled along the brake pipe, so as to permit the test of the continuity of the braking system by an operator aboard the locomotive.

6. A device according to claim 1, characterized in that the electronic control unit is programmed for distinguishing a depression spike due to a braking command coming from the locomotive from a possible disturbance on the basis of the pressure variation in the brake pipe (12) detected by said pressure transducer (34).

7. A device according to claim 1, characterized in that said electric valve (44, 46) is bistable.

8. A device according to any of the preceding claims, characterized in that it comprises means for transmitting information relating to its own operative state.

## Patentansprüche

1. Elektronisch gesteuerte elektropneumatische Vorrichtung zum Unterstützen beim Bremsvorgang eines schienengebundenen Zuges (10) mit einem Druckluftbremssystem, das eine Bremsleitung (12) aufweist, die sich entlang aller Fahrzeuge (M, V₁, V₂; V₃, ...Vₙ) des Zuges erstreckt, umfassend:
- einen Druckwandler (34), ausgelegt, um eine Druckabfallspitze in der Bremsleitung (12) des Zuges (10) festzustellen,
- mindestens ein Elektroventil (44, 46), das zwischen einer offenen und einer geschlossenen Stellung betrieben werden kann, wobei in der offenen Stellung das Elektroventil (44, 46) die Bremsleitung (12) mit der Atmosphäre in Verbindung bringt,
dadurch gekennzeichnet, dass
es eine elektronische Steuereinheit (40) umfasst, die dazu ausgelegt ist, die Öffnung des Elektroventils (44, 46) zu steuern, wenn der Druckwandler (34) die Anwesenheit einer Druckabfallspitze in der Bremsleitung (12) feststellt, um so eine Steuerung des Bremsvorgangs vom Ende des Zuges aus, auch ohne Übertragung von Information durch die Lokomotive über Funk oder Vielfachleitung, zu erlauben.

2. Vorrichtung nach Anspruch 1, dadurch gekennzeichnet, dass die elektronische Steuereinheit (40) dazu programmiert ist, das Elektroventil (44, 46) für eine bestimmte Zeit bis zum Erreichen einer bestimmten Drucksenkung oder in Übereinstimmung mit einer Regel, welche die Öffnungszeit und den Druckabfall in der Bremsleitung verbindet, zu öffnen.

3. Vorrichtung nach Anspruch 1, dadurch gekennzeichnet, dass die elektronische Steuereinheit (40) dazu programmiert ist, die ungefähre Länge des Zuges (10) als eine Funktion der durch den Druckwandler (34) bereitgestellten Signale zu ermitteln.

4. Vorrichtung nach Anspruch 1, dadurch gekennzeichnet, dass sie ein erstes Elektroventil (44), bereitgestellt zum Durchführen einer gesteuerten Entladung der Bremsleitung, und ein zweites Elektroventil (46), ausgelegt für eine schnelle Entladung mit hohem Durchsatz der Bremsleitung, umfasst.

5. Vorrichtung nach Anspruch 1, dadurch gekennzeichnet, dass die elektronische Steuereinheit (40) dazu programmiert ist, der Lokomotive ein Signal zu schicken, das den Empfang eines Bremsbefehls, der sich entlang der Bremsleitung bewegt hat, anzeigt, um so einen Test der Kontinuität des Bremssystems durch einen Bediener in der Lokomotive zu ermöglichen.

6. Vorrichtung nach Anspruch 1, dadurch gekennzeichnet, dass die elektronische Steuereinheit dazu programmiert ist, eine Druckabfallsspitze aufgrund eines von der Lokomotive ausgehenden Bremsbefehls von einer möglichen Störung aufgrund der durch den Druckwandler (34) festgestellten Druckänderung in der Bremsleitung (12) zu unterscheiden.

7. Vorrichtung nach Anspruch 1, dadurch gekennzeichnet, dass das Elektroventil (44, 46) bistabil ist.

8. Vorrichtung nach irgendeinem der vorstehenden Ansprüche, dadurch gekennzeichnet, dass ein Mittel zum Übertragen von ihren Betriebszustand betreffende Information umfasst.

## Revendications

1. Dispositif électro-pneumatique à commande électronique, destiné à coopérer au freinage d'un train ferroviaire (10) commandant un système de freinage pneumatique incluant une canalisation de frein (12), qui s'étend le long de l'ensemble des véhicules (M, V₁, V₂, V₃, ... Vₙ) du train, comprenant :
- un transducteur de pression (34) agencé pour détecter une pointe de dépression dans la canalisation de frein (12) du train (10),
- au moins une vanne électrique (44,46), qui peut être actionnée entre une position ouverte et une position fermée, ladite vanne électrique (44,46), dans sa position ouverte, plaçant la canalisation de frein (12) en communication avec l'atmosphère,
caractérisé en ce qu'il comprend une unité de commande électronique (40) pour commander l'ouverture de ladite vanne électrique (44,46) lorsque ledit transducteur de pression (34) détecte la présence d'une pointe de dépression dans la canalisation de frein (12) de manière à permettre une commande du freinage à partir de la queue du train même sans aucune information transmise par la locomotive par radio ou par l'intermédiaire d'un bus.

2. Dispositif selon la revendication 1, caractérisé en ce que ladite unité de commande électronique (40) est programmée pour ouvrir ladite vanne électrique (44, 46) pendant un intervalle de temps prédéterminé ou jusqu'à ce qu'une dépression prédéterminée dans la canalisation de frein soit atteinte ou conformément à une loi qui associe l'instant d'ouverture et la baisse de pression dans la canalisation de frein.

3. Dispositif selon la revendication 1, caractérisé en ce que ladite unité de commande électronique (40) est programmée pour déterminer les longueurs approximatives du train (10) en fonction de signaux délivrés par lesdits transducteurs de pression (34).

4. Dispositif selon la revendication 1, caractérisé en ce qu'il comprend une première vanne électrique (44) destinée à exécuter une décharge commandée de la canalisation de frein, une seconde vanne électrique (46) adaptée pour effectuer une décharge rapide avec un débit élevé de la canalisation de frein.

5. Dispositif selon la revendication 1, caractérisé en ce que l'unité de commande électronique (40) est programmée pour envoyer à la locomotive un signal indiquant la réception d'une commande de freinage, qui s'est déplacé le long de la canalisation de frein, de manière à permettre le test de la continuité du système de freinage par un opérateur à bord de la locomotive.

6. Dispositif selon la revendication 1, caractérisé en ce que l'unité de commande électronique est programmée de manière à établir une distinction entre une pointe de dépression due à une commande de freinage provenant de la locomotive, et une perturbation possible sur la base de la variation de pression dans la canalisation de frein (12) détectée par ledit transducteur de pression (34).

7. Dispositif selon la revendication 1, caractérisé en ce que ladite vanne électrique (44,46) est bistable.

8. Dispositif selon l'une quelconque des revendications précédentes, caractérisé en ce qu'il comprend des moyens pour transmettre une information concernant son propre état de fonctionnement.
